# EUROPEAN PATENT APPLICATION

(11) **EP 2 980 151 A1**
(43) Date of publication of application: **03.02.2016**
(21) Application number: 14775902.1
(22) Date of filing: 26.03.2014
(51) Int. Cl.: C08L 23/10, C08K 9/00, C08L 23/06, C08L 101/00, H01B 3/00, H01B 3/44, H01B 7/295

(54) **RESIN COMPOSITION AND COATED ELECTRIC WIRE**

(30) Priority: 28.03.2013 JP 2013069234
(71) Applicant: Yazaki Corporation, Minato-ku Tokyo 108-8333 (JP)
(72) Inventor: KOGO, Kosuke, Susono-shi Shizuoka 410-1107 (JP)
(74) Representative: Grünecker Patent- und Rechtsanwälte PartG mbB
(86) International application number: PCT/JP2014/058484
(87) International publication number: WO 2014/157314

(57) **Abstract**

Provided is a resin composition that makes it possible to produce a coated electric wire in a stable manner, and is capable of offering a coated electric wire which satisfies the battery-liquid resistance, flame retardancy, low-temperature resistance, flame retardancy, and abrasion resistance each stipulated in ISO 6722 directed to electric wires for automobiles. The composition is a resin composition obtained by blending from 100 to 180 parts both inclusive by mass of a surface-treated metal hydroxide with 100 parts by mass of a base resin which includes from 40 to 60 parts both inclusive by mass of a polypropylene homopolymer (A), from 1 to 30 parts both inclusive by mass of a polypropylene-based modified resin (B), from 10 to 25 parts both inclusive by mass of a thermoplastic elastomer (C), and from 1 to 15 parts both inclusive by mass of a low-density polyethylene (D).

## Description

### Technical Field

The present invention relates to a resin composition that is produced by using a polypropylene homopolymer as a base and blending various olefin resins and a flame retardant with the base, that makes it possible to produce an electric wire stably when used as a resin composition for electric-wire-coating, and that satisfies low-temperature resistance, flame retardancy, battery-liquid resistance, and abrasion resistance when the composition constitutes a coat layer for automobiles that is stipulated in ISO 6722.

### Background Art

For electric wires for automobiles, a composition suggested in Patent Literature 1 is known as a polyolefin-based resin composition for insulating an electric wire.

This resin composition is a composition containing: 10 parts by weight of a mixture of from 1 to 30 parts by weight of a maleic-acid-modified polypropylene resin (A), and a polyolefin-based resin other than the maleic-acid-modified polypropylene resin; from 10 to 80 parts by weight of a halogen-containing flame retardant (B); and from 5 to 45 parts by weight of a metal hydrate flame retardant (C).

An electric wire for automobiles that is coated with this resin composition can satisfy various performances, such as battery-liquid resistance, flame retardancy, low-temperature resistance, and abrasion resistance. However, it has been proved that the addition amount proportion of magnesium hydroxide is small and thus the resin is low in viscosity so that the electric wire is not stably produced with ease.

### Citation List

### Patent Literature

Patent Literature 1: JP 2009-40947 T

### Summary of Invention

### Technical Problem

An object of the present invention is to provide a resin composition for solving the above-mentioned problem, which is a flame-retardant resin composition that is obtained by blending magnesium hydroxide with an olefin-based resin, that makes it possible to produce a coated electric wire stably, and that can satisfy the battery-liquid resistance, flame retardancy, low-temperature resistance, flame retardancy, and abrasion resistance each stipulated in ISO 6722 directed to electric wires for automobiles.

### Solution to Problem

In order to attain the object, the inventors have made eager investigations to find out that a composition can be caused to attain a stable production of coated electric wires and to satisfy flame retardancy and battery-liquid resistance by use of a metal oxide made acid-resistant in a large proportion in the composition.

However, it has been proved that the low-temperature resistance and the abrasion resistance can be unfavorably lowered because of the necessity of the large-proportion addition of the metal hydroxide.

Thus, the inventors have advanced further investigations, so that the inventors have succeeded in solving the above-mentioned problem by using a polypropylene (homopolymer) as a base and blending, with this base, a polypropylene-based modified resin, a thermoplastic elastomer and a low-density polyethylene, and further taking a balance between blend amounts of these components.

Accordingly, in order to solve the above-mentioned problem, the resin composition of the present invention is a resin composition as recited in one aspect of the present invention, which is obtained by blending from 100 to 180 parts both inclusive by mass of a surface-treated metal hydroxide for 100 parts by mass of a base resin including from 40 to 60 parts both inclusive by mass of a polypropylene homopolymer (A), from 1 to 30 parts both inclusive by mass of a polypropylene-based modified resin (B), from 10 to 25 parts both inclusive by mass of a thermoplastic elastomer (C), and from 1 to 15 parts both inclusive by mass of a low-density polyethylene (D).

The coated electric wire of the present invention is a coated electric wire as recited in a preferred aspect of the present invention, which has a coat layer made from the resin composition recited in the one aspect of the present invention.

### Advantageous Effects of Invention

According to the resin composition of the present invention, a coated electric wire can be stably produced, and further the resultant coated electric wire satisfies battery-liquid resistance, flame retardancy, low-temperature resistance, flame retardancy, and abrasion resistance each stipulated in ISO 6722 for electric wires for automobiles.

### Brief Description of Drawings

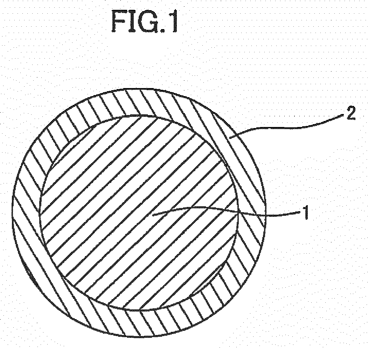

Fig. 1 is a model cross-sectional view of an example of a coated electric wire according to the present invention.

### Description of Embodiments

In the resin composition of the present invention, it is necessary that from 100 to 180 parts both inclusive by mass of a surface-treated metal hydroxide are blended with respect to 100 parts by mass of a base resin including from 40 to 60 parts both inclusive by mass of a polypropylene homopolymer (A), from 1 to 30 parts both inclusive by mass of a polypropylene-based modified resin (B), from 10 to 25 parts both inclusive by mass of a thermoplastic elastomer (C), and from 1 to 15 parts both inclusive by mass of a low-density polyethylene (D).

The polyolefin homopolymer is a polypropylene obtained by polymerizing propylene without using any monomer other than propylene. In the present invention, the use of the polypropylene polyolefin homopolymer makes it possible to produce advantageous effects of heightening the resultant composition, as a material, in elastic modules, and in abrasion resistance. If the blend amount proportion of the polyolefin homopolymer is too small, the abrasion resistance is insufficient. If the proportion is too large, the low-temperature resistance is lowered. The polyolefin homopolymer is available as PS201A or some other from SunAllomer Ltd., or as DS531P or some other from a company, SABIC.

The polypropylene-based modified resin used in the present invention is a resin obtained by causing maleic anhydride to undergo graft-copolymerization with a polypropylene-based resin. The polypropylene-based modified resin may be a resin produced by any one of the melting method, and the solution method.

The acid value (measured according to JIS K0070) of maleic anhydride ranges preferably from 15 to 55 both inclusive, more preferably from 30 to 40 both inclusive. If the acid value is too high, it is presumed that unnecessary fragments of maleic acid promote a deterioration of the material. If the acid value is too low, an interfacial adhesiveness between the metal hydroxide and the resin may be lowered to be lowered in physical properties such as abrasion resistance.

If the blend amount proportion of the polypropylene-based modified resin is too small, the abrasion resistance is lowered. If the proportion is too large, the low-temperature resistance is lowered. The blend amount ranges preferably from 15 to 25 parts both inclusive by mass.

The polypropylene-based modified resin used in the present invention is available as YUMEX 1001 or some other from Sanyo Chemical Industries, Ltd., or FUSABOND P613 or some other from the company DuPont.

The thermoplastic elastomer used in the present invention may be one or more olefin-based and/or styrene-based thermoplastic elastomers. The olefin-based thermoplastic elastomer is an elastomer in which an olefin-based resin such as polyethylene or polypropylene is rendered hard segments and an olefin-based rubber is rendered soft segments. The olefin-based thermoplastic elastomer is typically a blend-type elastomer (polymer alloy) in which soft segments (domains) are finely dispersed in a matrix of hard segment. The elastomer may be of a type in which hard segments are copolymerized with soft segments. Examples of the olefin-based rubber include ethylene-propylene rubber (EPR or EPM), and ethylene-propylene-diene rubber (EPDM). Plural ones of these rubbers may be used in combination.

The styrene-based thermoplastic elastomer may be a block copolymer or random copolymer having aromatic-vinyl-based polymer blocks (hard segments) and conjugated-diene-based polymer blocks (soft segments). Examples of the aromatic-vinyl-based compound include styrene; α-alkyl-substituted styrenes such as α-methylstyrene, α-ethylstyrene, and α-methyl-p-methylstyrene; and nucleus-alkyl-substituted styrenes such as o-methylstyrene, m-methylstyrene, p-methylstyrene, 2,4-dimethylstyrene, ethylstyrene, 2,4,6-trimethylstyrene, o-t-butylstyrene, p-t-butylstyrene, and p-cyclohexylstyrene.

Examples of the conjugated-diene-based compound include butadiene, isoprene, and methylpentadiene. As a different rubber component, for example, a diene-based rubber may be used, examples thereof including styrene-butadiene rubber (SBR), nitrile rubber (NBR), and butyl rubber (IIR). The different rubber component is preferably made of only one, or two or more of these materials.

If the blend amount proportion of the thermoplastic elastomer is too small, the low-temperature resistance is insufficient. If the proportion is too large, the abrasion resistance is lowered. The blend amount is preferably from 15 to 20 parts both inclusive by mass.

The thermoplastic elastomer usable in the present invention is available as Adfrex Q200 or some other from LyondellBasell Industries N.V., or THERMORUN QT60MB or some other from Mitsubishi Chemical Corp.

The low-density polyethylene used in the present invention may be a polyethylene having a density of 0.910 g/cm³ or more and less than 0.935 g/cm³. In the invention, the polyethylene is a polyethylene in which ethylene molecules are bonded to each other to cause the resultant to have branches at random. The use of such a low-density polyethylene makes it possible to produce an advantageous effect of heightening the abrasion resistance. The polyethylene, in which ethylene molecules are bonded to each other to cause the resultant to have branches at random, is available as NOVATEC LDZE41k or some other from Japan Polyethylene Corp., or 3010D or some other from LyondellBasell Industries N.V.

The blend amount of the low-density polyethylene is preferably from 8 to 10 parts both inclusive by mass for 100 parts by mass of the resin. If the blend amount proportion is too small, the abrasion resistance is insufficient. If the proportion is too large, the resultant resin composition is softened to be lowered in abrasion resistance.

About a flame retardant made of the surface-treated metal hydrate used in the present invention, examples of a base material thereof include compounds each having a hydroxyl group or crystallization water, such as magnesium hydroxide, aluminum hydroxide, calcium hydroxide, basic magnesium carbonate, hydrated aluminum silicate, and hydrated magnesium silicate; and any combination of two or more of these examples. Of these examples, magnesium hydroxide is particularly preferred as the base material, considering a lowering in the abrasion resistance by the addition of the flame retardant to the resin composition, foams that may be unfavorably generated when the composition is worked, and other problems.

In the surface treatment, an inorganic substance is precipitated onto the surface of the metal hydrate, or the surface is covered with, for example, an aliphatic acid, a silane coupling agent, or a polymer to cause the surface to have resistance against acids. Alternatively, the surface is subjected to any other surface treatment for giving resistance against acids to the surface. The blend amount of the surface-treated metal hydrate flame retardant is preferably from 120 to 140 parts both inclusive by mass for 100 parts by mass of the polyolefin-based resin. If the blend amount proportion is too small, the flame retardancy is insufficient. If the proportion is too large, the abrasion resistance and the battery-liquid resistance are lowered. As required, the following blend is appropriately usable: a blend of the surface-treated metal hydrate flame retardant with magnesium hydroxide or any other metal hydrate that is not surface-treated.

The surface-treated metal hydrate usable in the present invention is available as, for example, EP2A or some other from Konoshima Chemical Co., Ltd., or KISUMA 5J or some other from Kyowa Chemical Industry Co., Ltd.

Besides the above-mentioned essential components, the following may be blended with the resin composition of the present invention as far as the advantageous effects of the invention are not hindered: a flame retardant, a flame retardancy aid, an antioxidant, a metal inactivating agent, an antiaging agent, a lubricant, a filler and a reinforcing agent, a UV absorbent, a stabilizer, a plasticizer, a pigment, a dye, a colorant, an antistatic agent, a foaming agent, and others.

The resin composition of the present invention can be obtained by kneading the above-mentioned raw materials, using, for example, a kneader, a shaft type mixer, or a Bunbury mixer.

Furthermore, an extruder is used to extrude the thus obtained resin composition onto the circumference of a core wire made of a metal that may be of various types, whereby a coated electric wire can be obtained.

The above has described the present invention, giving preferred embodiments thereof. However, the resin composition and the coated electric wire of the invention are not limited to the formulations or configures of the above-mentioned embodiments.

In accordance with findings known in the prior art, those skilled in the art can appropriately modify the resin composition and the coated electric wire of the present invention. Even when such a modification is made, the resultants are, of course, included in the scope of the invention as far as the resultants have the resin composition and the coated electric wire of the invention, respectively.

### Examples

Resin compositions of Examples 1 to 24 and Comparative Examples 1 to 10, the total number of species of which was 25, were each obtained by kneading some out of raw materials shown in Table 1 (an abbreviation being attached to each of the raw materials in the table) through a kneader in accordance with blend amounts (parts by mass) shown in Tables 2 to 5.

An extruder was used to extrude each of these resin compositions onto the circumference of a core wire (the number of element wires thereof: 7; and the calculated sectional area of the pressed circle: about 0.1407 mm²) to yield a coated electric wire having an outer diameter of 0.88 mm (corresponding to CHFUS 0.13-sq. automobile electric wire). Fig. 1 illustrates a model cross-sectional view of the electric wire. In this figure, reference number 1 represents a core wire; and 2, a coat layer formed around the core wire 1.

**[Table 1]**

| Abbreviation | | Manufacturers etc. |
|---|---|---|
| M1 | Polypropylene homopolymer | PS201A (manufactured by SunAllomer Ltd.) |
| M2 | Polypropylene-based modified resin | YUMEX 1001 (manufactured by Sanyo Chemical Industries, Ltd.) |
| M3 | Thermoplastic elastomer | AdfrexQ200 (manufactured by LyondellBasell Industries N.V.) |
| M4 | Low-density polyethylene | NOVATEC LDZE41K, manufactured by Japan Polyethylene Corp. |
| M5 | Surface-treated metal hydroxide | EP2A, manufactured by Konoshima Chemical Co., Ltd. |
| m1 | Polypropylene homopolymer | DS531P, manufactured by a company, SABIC |
| m2 | Polypropylene-based modified resin | FUSABOND P613, manufactured by the company DuPont |
| m3 | Thermoplastic elastomer | THERMORUN QT60MB, manufactured by Mitsubishi Chemical Corp. |
| m4 | Low-density polyethylene | 3010D, manufactured by LyondellBasell Industries N.V. |
| m5 | Surface-treated metal hydroxide | KISUMA 5J, manufactured by Kyowa Chemical Industry Co., Ltd. |

**[Table 2]**

| | | Examples | | | | | | | | |
|---|---|---|---|---|---|---|---|---|---|---|
| | | 1 | 2 | 3 | 4 | 5 | 6 | 7 | 8 | 9 |
| Raw materials | M1 | 60 | 60 | 60 | 55 | 45 | 40 | 55 | 45 | 45 |
| | M2 | 15 | 15 | 15 | 20 | 20 | 20 | 20 | 20 | 15 |
| | M3 | 15 | 15 | 15 | 20 | 25 | 25 | 10 | 20 | 25 |
| | M4 | 10 | 10 | 10 | 5 | 10 | 15 | 15 | 15 | 15 |
| | M5 | 100 | 130 | 180 | 130 | 130 | 130 | 130 | 130 | 130 |
| Evaluation results | Stable electric-wire-production | ○ | ○ | ○ | ○ | ○ | ○ | ○ | ○ | ○ |
| | Battery-liquid resistance | ○ | ○ | ○ | ○ | ○ | ○ | ○ | ○ | ○ |
| | Flame retardancy | ○ | ○ | ○ | ○ | ○ | ○ | ○ | ○ | ○ |
| | Low-temperature resistance | ○ | ○ | ○ | ○ | ○ | ○ | ○ | ○ | ○ |
| | Abrasion resistance | ○ | ○ | ○ | ○ | ○ | ○ | ○ | ○ | ○ |

**[Table 3]**

| | | Examples | | | | | |
|---|---|---|---|---|---|---|---|
| | | 10 | 11 | 12 | 13 | 14 | 15 |
| Raw materials | M1 | 55 | 55 | 55 | 59 | 50 | 40 |
| | M2 | 24 | 15 | 10 | 1 | 15 | 30 |
| | M3 | 20 | 20 | 20 | 25 | 25 | 20 |
| | M4 | 1 | 10 | 15 | 15 | 10 | 10 |
| | M5 | 130 | 130 | 130 | 130 | 130 | 130 |
| Evaluation results | Stable electric-wire-p roduction | ○ | ○ | ○ | ○ | ○ | ○ |
| | Battery-liquid resistance | ○ | ○ | ○ | ○ | ○ | ○ |
| | Flame retardancy | ○ | ○ | ○ | ○ | ○ | ○ |
| | Low-temperature resistance | ○ | ○ | ○ | ○ | ○ | ○ |
| | Abrasion resistance | ○ | ○ | ○ | ○ | ○ | ○ |

**[Table 4]**

| | | Examples | | | | | | | | | | | |
|---|---|---|---|---|---|---|---|---|---|---|---|---|---|
| | | 16 | 17 | 18 | 19 | 20 | 21 | 22 | 23 | 24 | 25 | 26 | 27 |
| Raw materials | m1 | 60 | 50 | 40 | 50 | 50 | 55 | 55 | 60 | 50 | 55 | 55 | 50 |
| | m2 | 10 | 10 | 20 | 1 | 30 | 20 | 10 | 30 | 25 | 20 | 20 | 20 |
| | m3 | 20 | 25 | 25 | 25 | 10 | 10 | 25 | 9 | 15 | 15 | 20 | 25 |
| | m4 | 10 | 15 | 15 | 15 | 10 | 15 | 10 | 1 | 15 | 10 | 5 | 5 |
| | m5 | 100 | 100 | 100 | 100 | 100 | 100 | 100 | 100 | 100 | 130 | 130 | 130 |
| Evaluation results | Stable electric-wire-production | ○ | ○ | ○ | ○ | ○ | ○ | ○ | ○ | ○ | ○ | ○ | ○ |
| | Battery liquid resistance | ○ | ○ | ○ | ○ | ○ | ○ | ○ | ○ | ○ | ○ | ○ | ○ |
| | Flame retardancy | ○ | ○ | ○ | ○ | ○ | ○ | ○ | ○ | ○ | ○ | ○ | ○ |
| | Low-temperature resistance | ○ | ○ | ○ | ○ | ○ | ○ | ○ | ○ | ○ | ○ | ○ | ○ |
| | Abrasion resistance | ○ | ○ | ○ | ○ | ○ | ○ | ○ | ○ | ○ | ○ | ○ | ○ |

**[Table 5]**

| | | Comparative Examples | | | | | | | | | |
|---|---|---|---|---|---|---|---|---|---|---|---|
| | | 1 | 2 | 3 | 4 | 5 | 6 | 7 | 8 | 9 | 10 |
| Raw materials | M1 | 60 | 60 | 65 | 35 | 55 | 45 | 55 | 55 | 60 | 40 |
| | M2 | 15 | 15 | 15 | 25 | 21 | 14 | 25 | 9 | 0 | 31 |
| | M3 | 15 | 15 | 15 | 25 | 9 | 26 | 20 | 20 | 25 | 19 |
| | M4 | 10 | 10 | 5 | 15 | 15 | 15 | 0 | 16 | 15 | 10 |
| | M5 | 99 | 131 | 130 | 130 | 130 | 130 | 130 | 130 | 130 | 130 |
| Evaluation results | Stable electric-wire-production | ○ | ○ | ○ | ○ | ○ | ○ | ○ | ○ | ○ | ○ |
| | Battery-liquid resistance | ○ | × | ○ | ○ | ○ | ○ | ○ | ○ | ○ | ○ |
| | Flame retardancy | × | ○ | ○ | ○ | ○ | ○ | ○ | ○ | ○ | ○ |
| | Low-temperature resistance | ○ | ○ | × | ○ | | ○ | ○ | ○ | ○ | × |
| | Abrasion resistance | ○ | × | ○ | × | ○ | × | × | × | × | ○ |

These resin compositions and the coated electric wires were each evaluated about the electric wire producibility (for producing electric wires stably), the battery-liquid resistance, the flame retardancy, the low-temperature resistance, and the abrasion resistance thereof.

### <Electric wire producibility >

The 34 resin composition species, the composition of each of which is shown in one of Tables 2 to 5, was used to coat a 0.13 sq. electric wire stipulated in ISO 6722 to have a coat thickness of 0.2 mmt at a linear velocity of 300 m/minute or more by use of facilities capable of attaining electric-wire-extrusion at a linear velocity of 300 m/minute or more. In this way, a coated electric wire was produced. The mouthpiece used at this time was a mouthpiece having a pore diameter of 1 to 1.5 mm.

It was evaluated whether or not each of the resin composition species made it possible to produce the electric wire stably at the time of the extrusion. A criterion for the judgment is as follows: when the outer surface of its insulating layer was touched with fingers and then the surface was judged to be smooth and further when the coated electric wire was cut perpendicularly to the length direction of the wire to observe the resultant cross sections and then the cross sections were judged to have the conductor line at the center of the electric wire without being one-sided, the original resin composition was estimated to be sufficiently capable of attaining a stable production of an electric wire, so as to be represented by a mark "O". Alternatively, when the electric wire surface was rough, and/or the position of the conductor was one-sided, the original resin composition was incapable of attaining a stable production of an electric wire. Thus, the resin composition was estimated to be insufficient, so as to be represented by a mark "×".

### <Battery-liquid resistance>

This resistance was in accordance with ISO 6722. Specifically, a battery liquid (sulfuric acid (H₂SO₄) solution in water) having a specific gravity of 1.260 ± 0.005 was sparged drop by drop onto each of the coated electric wires produced as described above not to bring the drops into contact with each other. This coated electric wire, which was in the state that the sulfuric acid solution contacted the coat layer, was held in an oven of 90 Celsius degrees temperature for 8 hours, and then taken out therefrom. The battery liquid was again sparged thereonto in the same manner as described above, and then the coated electric wire was held in an oven of 90 Celsius degrees temperature for 8 hours. This operation was defined as one cycle. This cycle was repeated two rimes in total, and then the electric wire was allowed to stand still at room temperature (23 Celsius degrees ± 5 Celsius degrees) for 30 minutes. Next, this coated electric wire was wound onto a predetermined mandrel, and then the outer surface of the wound coated electric wire was visually observed. When the exposure of the conductor was not observed in this case, the electric wire was subjected to a voltage resistance test at 1 kV for 1 minute. When the electric wire did not undergo electric conduction, the electric wire was estimated to have a sufficient battery-liquid resistance to be represented by a mark "○". Alternatively, when the conductor was exposed to the outside or when the electric wire underwent electric conduction, the electric wire was estimated to have an insufficient battery-liquid resistance to be represented by a mark "×".

### <Flame retardancy>

This property was in accordance with ISO 6722. Each of the coated electric wires was set inside a draft to have an angle of 45 Celsius degrees to the perpendicular direction. A Bunsen burner was prepared, and then shifted to position the set coated electric wire inside a region of inner flame therefrom. A region where flame contacted the electric wire was positioned at a site 100 mm apart from the lower end of the electric wire. When the electric wire was an electric wire in which the sectional area of its conductor was 2.5 mm² or less, flame was taken away from the test sample after 15 seconds. When the electric wire was an electric wire in which the sectional area of its conductor was 2.5 mm² or less, flame was taken away from the test sample after 30 seconds. In this case, when flame on the insulating coat went out in a time of 70 seconds or shorter and further the insulator in the upper part of the test sample remained, without being fired, to have a length of 50 mm or more, the electric wire was estimated to have a sufficient flame retardancy to be represented by a mark "○". Alternatively, when the sample continued to be fired over 70 seconds or longer, or when the insulator remaining unburned in the upper part of the test sample had a length less than 50 mm, the electric wire was estimated to have an insufficient flame retardancy to be represented by a mark "×".

### <Low-temperature resistance>

This property was in accordance with ISO 6722. A sample from each of the coated electric wires was used, the sample having a length of 600 mm. In the test, a low-temperature tank having a temperature of -40 Celsius degrees ± 2 Celsius degrees was used. The coated electric wire sample and a mandrel having a diameter 5 times that of the coated electric wire were beforehand put in the low-temperature tank to be sufficiently cooled. Thereafter, inside the low-temperature tank, the coated electric wire was wound around the mandrel to make three or more rounds thereon, and then the resultant was taken away from the cooling tank. After the temperature thereof returned to room temperature, the coated-electric-wire-wound region was visually observed. In this case, when the exposure of the conductor was not observed, the electric wire was subjected to a voltage resistance test at 1 kV for 1 minute. When the electric wire did not undergo electric conduction, the electric wire was estimated to have a sufficient low-temperature resistance to be represented by a mark "○". Alternatively, when the conductor was exposed to the outside or when the electric wire underwent electric conduction, the electric wire was estimated to have an insufficient low-temperature resistance to be represented by a mark "×".

### <Abrasion resistance>

This resistance was in accordance with ISO 6722. The following was used to make a measurement in accordance with a scrape abrasion standard: each of the coated electric wires that was rendered a coated electric wire having a load of 7 N, a wire having a diameter of 0.45 mm, a core wire having a sectional area of 0.13 mm², and a coat layer having a thickness of 0.2 mm. When the coated electric wire was scraped 100 times or more and the wire endured the scraping, the electric wire was estimated to have a sufficient abrasion resistance to be represented by a mark "O". Alternatively, when the electric wire underwent electric conduction by repeating the scraping less than 100 times, the electric wire was estimated to have an insufficient abrasion resistance to be represented by a mark "×". Results of these evaluations are together shown in Tables 2 to 5.

From Tables 2 to 5, it has been understood that according to the resin composition of the present invention, a stable production of coated electric wires can be attained, and further the resultant coated electric wires satisfy the battery-liquid resistance, flame retardancy, low-temperature resistance, flame retardancy, and abrasion resistance each stipulated in ISO 6722 for electric wires for automobiles.

### Reference Signs List

1: Core wire
2: Coat layer

## Claims

1. A resin composition, obtained by blending from 100 to 180 parts both inclusive by mass of a surface-treated metal hydroxide for 100 parts by mass of a base resin, the base resin comprising from 40 to 60 parts both inclusive by mass of a polypropylene homopolymer (A), from 1 to 30 parts both inclusive by mass of a polypropylene-based modified resin (B), from 10 to 25 parts both inclusive by mass of a thermoplastic elastomer (C), and from 1 to 15 parts both inclusive by mass of a low-density polyethylene (D).

2. A coated electric wire, which includes a coat layer made from the resin composition recited in claim 1.
